# EUROPÄISCHE PATENTSCHRIFT

(11) **EP 2 378 855 B1**
(45) Veröffentlichungstag und Bekanntmachung des Hinweises auf die Patenterteilung: **04.03.2015**
(21) Anmeldenummer: 08875025.2
(22) Anmeldetag: 19.11.2008
(51) Int. Cl.: A01G 9/14, B32B 17/10

(54) **GEWÄCHSHAUSSYSTEM**
GREENHOUSE SYSTEM
SYSTÈME DE SERRE

(43) Veröffentlichungstag der Anmeldung: 26.10.2011
(73) Patentinhaber: Scheuten S.à.r.l., 5916 PA Venlo (NL)
(72) Erfinder: GIESEN, Leon, 5708 CL Helmond (NL); RUTTEN, Jacques, 5916 RH Venlo (NL); VILLARI, Valentino, 41063 Mönchengladbach (DE)
(74) Vertreter: Jostarndt, Hans-Dieter
(86) Internationale Anmeldenummer: PCT/EP2008/009745
(87) Internationale Veröffentlichungsnummer: WO 2010/057504

(56) Entgegenhaltungen:
- EP-A- 0 747 330
- EP-A- 0 759 566
- EP-A- 1 371 745
- EP-A- 1 889 818
- DE-A1- 3 314 922
- DE-U1- 9 216 645
- DE-U1- 29 606 493
- DE-U1- 29 615 243

## Beschreibung

Die vorliegende Erfindung betrifft ein Gewächshaussystem, welches mindestens eine Pflanzenkultur umfasst, wobei mindestens ein Teil der Verglasung des Gewächshaussystems mindestens eine an diese Pflanzenkultur angepasste Funktionsschicht umfasst.

Es ist bekannt, Pflanzenkulturen in Gewächshäusern zu züchten. Zur Verglasung dieser Gewächshäuser kann dabei zum Beispiel Glas, insbesondere Silikatglas oder Nörpelglas, verwendet werden.

Nörpelglas wird meist bevorzugt verwendet, da es aufgrund seiner Struktur die Pflanzen vor Verbrennungen durch direkte Sonneneinstrahlung schützt und diffuses Licht für die Pflanzenkultur zur Verfügung stellt.

Die Isolierung derart verglaster Gewächshäuser lässt jedoch meistens zu wünschen übrig. Dadurch ist im Sommer viel Energie nötig, um diese Gewächshäuser zu kühlen und im Winter wiederum viel Energie nötig, um diese Gewächshäuser zu heizen.

Die Verwendung von Isolierglas zur Verglasung von Gewächshäusern ist nicht sehr verbreitet, da bei Isolierglas die Lichttransmission im Vergleich zu einfachem Glas ungefähr 10% geringer ist. Dadurch wird ein geringerer Ertrag erwartet.

Dabei spielt die Transmission des Gewächshauses beziehungsweise der verwendeten Verglasung im gesamten Wellenlängenbereich eine wichtige Rolle, da 1% mehr Transmission meist 1% mehr Ertrag bei der Pflanzenkultur bedeutet.

Jedoch wird bei der Verglasung von Gewächshäusern in letzter Zeit auch vermehrt auf glasartige Polymermaterialien zurückgegriffen.

Diese weisen die Vorteile auf, dass sie im Vergleich zu Glas leicht, bruchsicher und meist als Sandwichpaneele, Hohlkammerplatten beziehungsweise als sogenannte Stegdoppel- oder sogar als Stegdreifachplatten zur Verfügung gestellt werden.

Jedoch haben auch diese Materialien große Nachteile, da sie unter Umständen für UV-Licht transparent sein können, und somit zu Verbrennungen an den Pflanzenkulturen bei starker Lichteinstrahlung beitragen können. Zudem sind diese Materialien nicht sehr UV-stabil und altern daher unter dauernder Lichteinstrahlung. Darüber hinaus ist die Isolierung bei Sandwichpaneelen, Hohlkammerplatten beziehungsweise sogenannten Stegdoppel- oder sogar als Stegdreifachplatten im Vergleich zu Isolierglas ineffizient.

So lehrt die EP 0 759 566 A1 ein Gewächshaus aus Kompositmaterial, das aus einem optional mehrschichtigen Interferenzschichtsystem auf transparentem Glas besteht und das Transmission und Reflexion in Hinblick auf das Wachstum der Pflanzen beeinflusst. Sie lehrt hiermit ein Gewächshaussystem mit einer Verglasung, die eine an die Pflanzenkultur angepasste Funktionsschicht umfasst. Hierbei umfasst das Interferenzschichtsystem abwechselnd Schichten mit unterschiedlichen Brechzahlen und stellt so eine Maßnahme zur Reduzierung der Reflexion dar. Allerdings offenbart die EP'566 A1 keine Isolierglasscheiben zur Verglasung und es wird auch nicht gelehrt, dass der Anteil an diffusem Durchlicht zwischen 10% und 100% liegt und das weiterhin die Glasscheibe weniger als 0.1 % von Stoffen enthält, die Strahlung mit einer Wellenlänge von 10 nm bis 1,1 mm absorbieren.

Durch diese Vor- und Nachteile der verschiedenen zur Verglasung verwendeten Materialien kann es daher schwierig werden, die optimalen und jeweils an die gezüchteten Pflanzen angepassten Bedingungen für eine bestimmte Pflanzenkultur zu Verfügung zu stellen.

Aufgabe der vorliegenden Erfindung ist es, ein Gewächshaussystem zur Verfügung zu stellen, welches optimale Bedingungen für die jeweilige Pflanzenkultur sicherstellt.

Die Aufgabe wird durch ein Gewächshaussystem mit den Merkmalen des Anspruchs 1 gelöst.

Vorteilhafte Weiterbildungen und Ausführungsformen ergeben sich aus der folgenden Beschreibung sowie den Unteransprüchen.

Die vorliegende Erfindung betrifft ein Gewächshaussystem, welches mindestens eine Pflanzenkultur umfasst, wobei mindestens ein Teil der Verglasung des Gewächshaussystems mindestens eine an diese Pflanzenkultur angepasste Funktionsschicht umfasst.

Im Sinne der vorliegenden Erfindung umfasst der Begriff Gewächshaussystem alle Arten von lichtdurchlässigen Konstruktionen, wie zum Beispiel Gewächshäusern, Glashäusern, Treibhäusern, Folientunneln oder Kombinationen davon, die das geschützte Kultivieren von Pflanzen ermöglichen und welche bevorzugterweise mindestens eine Pflanzenkultur umfassen. Dabei kann das Gewächshaussystem mindestens eine, aber auch eine Vielzahl verschiedener lichtdurchlässiger Konstruktionen umfassen, die in irgendeiner Weise zum Beispiel durch Durchgänge, Gänge, Tunnel, Türen, Tore, Schleusen miteinander verbunden sind. Die einzelnen lichtdurchlässigen Konstruktionen, die das geschützte Kultivieren von Pflanzen ermöglichen, können dabei zum Beispiel in Einzelbauweise (mit jeweils vier freiliegenden Wänden), in Serienbauweise (mit mindestens einer gemeinsamen Trennwand zwischen zwei benachbarten Konstruktionen) oder in Blockbauweise (als zusammenhängende Blöcke mit Außenwänden, aber ohne Trennwände zwischen benachbarten Konstruktionen) ausgeführt werden.

Verglasung beziehungsweise Glas beziehungsweise Glasscheibe oder Glasplatte im Sinne der vorliegenden Erfindung umfasst dabei alle Arten von Glas, insbesondere Ziehglas oder gehärtetes oder ungehärtetes Floatglas. Transparent kann dabei bedeuten, dass die Transmission im sichtbaren Wellenlängenbereich höher als 25 %, bevorzugt 50 % ist.

Eine Pflanzenkultur im Sinne der Erfindung umfasst mindestens eine Pflanze, bevorzugt aber zwei oder mehrere bevorzugterweise benachbarte Pflanzen, welche kultiviert werden. Dabei kann eine Pflanzen kultur auch mehrere unterschiedliche oder besonders bevorzugt gleiche Pflanzen umfassen.

Darüber hinaus kann das Gewächshaussystem auch mehrere gleiche oder besonders bevorzugt unterschiedliche Pflanzenkulturen umfassen.

Ein Teil der Verglasung des Gewächshaussystems im Sinne der vorliegenden Erfindung bedeutet mindestens einen Abschnitt der Verglasung des Gewächssystems, also zum Beispiel mindestens eine zur Verglasung verwendete Glasplatte. Dabei beziehen sich die Begriffe wie "ein Teil der Verglasung" im Sinne der vorliegenden Erfindung besonders bevorzugt auf die Dachverglasung des Gewächshaussystems oder auf einen Teil davon.

Ein Teil der Verglasung des Gewächshaussystems im Sinne der vorliegenden Erfindung kann dabei bevorzugt mindestens 5 %, bevorzugt mindestens 10 %, weiter bevorzugt mindestens 15 %, weiter bevorzugt mindestens 20 %, weiter bevorzugt mindestens 25%, weiter bevorzugt mindestens 30 %, weiter bevorzugt mindestens 35 %, weiter bevorzugt mindestens 40 %, weiter bevorzugt mindestens 45 %, besonders bevorzugt mindestens 50 % der Verglasung und insbesondere der Dachverglasung des Gewächshaussystems ausmachen.

Ein Teil der Verglasung des Gewächshaussystems im Sinne der vorliegenden Erfindung kann dabei bis zu 55 %, bevorzugt bis zu 60 %, weiter bevorzugt bis zu 65 %, weiter bevorzugt bis zu 70 %, weiter bevorzugt bis zu 75%, weiter bevorzugt bis zu 80 %, weiter bevorzugt bis zu 85 %, weiter bevorzugt bis zu 90 %, weiter bevorzugt bis zu 95 %, besonders bevorzugt bis zu 100 % der Verglasung und insbesondere der Dachverglasung des Gewächshaussystems ausmachen.

Angepasst an eine Pflanzenkultur im Sinne der vorliegenden Erfindung kann dabei bedeuten, dass mindestens eine Eigenschaft eines Teils der Verglasung des Gewächshaussystems dank mindestens einer Funktionsschicht an das jeweilige Optimum für diese Pflanzenkultur angenähert wird. Dabei kann insbesondere zum Beispiel der Anteil an diffusem Durchlicht beziehungsweise diffusem transmittiertem Licht und/oder die Transmission der Verglasung in mindestens einem bestimmten Wellenlängenbereich dank mindestens einer Funktionsschicht an das jeweilige Optimum für diese Pflanzenkultur angenähert werden. Das Optimum für eine bestimmte Pflanzenkultur kann dabei mit dem Optimum für die Pflanze dieser Kultur übereinstimmen. Sollte die Pflanzenkultur verschiedene Pflanzen umfassen, so kann das Optimum für die Pflanzenkultur auch den Mittelwert der Optima für die verschiedenen Pflanzen, gegebenenfalls unter Berücksichtigung ihres Anteils an der Pflanzenkultur, entsprechen.

Das Optimum bezüglich des Anteils an diffusem Durchlicht beziehungsweise an diffusem transmittiertem Licht hängt dabei von der jeweiligen Pflanzenkultur beziehungsweise von den jeweiligen Pflanzen ab. Der Anteil an diffusem Durchlicht beziehungsweise an diffusem transmittiertem Licht beziehungsweise an transmittiertem Streulicht im Sinne der vorliegenden Erfindung kann dabei der Anteil an Einstrahlungslicht, insbesondere Sonneneinstrahlungslicht, sein, welcher, nachdem er die Verglasung durchquert hat (also transmittiert wurde), als Streulicht beziehungsweise diffuses Licht, bei dem die einzelnen Lichtstrahlen im Wesentlichen nicht (mehr) parallel zueinander ausgerichtet sind, in den Innenraum des Gewächshaussystems gelangt. Dabei kann die gegebenenfalls ursprüngliche parallele Ausrichtung durch Streuung, insbesondere durch Volumenstreuung zum Beispiel durch Reflexionen, durch Refraktionsphänomene oder durch Interferenzphänomene gestört werden.

Die optimale Transmission in bestimmten Wellenlängenbereichen hängt dabei von der jeweiligen Pflanzenkultur beziehungsweise von den jeweiligen Pflanzen ab. Allgemein kann man jedoch sagen, dass eine hohe Transmission für das Pflanzenwachstum förderlich ist.

Jedoch gibt es für jede Pflanze einen ziemlich individuellen so genannten PAR (Photosynthetic Active Radiation)-Bereich des elektromagnetischen Spektrums. Der PAR-Bereich ist der Wellenlängenbereich, der zum Wachstum der jeweiligen Pflanzenkultur beziehungsweise von der jeweiligen Pflanze beitragen kann, da er für die Fotosynthese verwendet werden kann.

Der PAR-Bereich umfasst dabei zumeist zum Beispiel einen Wellenlängenbereich von 300 nm bis 800 nm bevorzugt von 400 nm bis 700 nm. Innerhalb dieses Bereiches tragen bestimmte Wellenlängen nochmals in besonders effizienter Weise zur Fotosynthese und damit zum Pflanzenwachstum bei. Das gelb/orange Licht im Wellenlängenbereich zwischen ungefähr 550 nm und 600 nm insbesondere zwischen 600 nm und 650 nm ist dabei besonders effizient. Auch rotes Licht im Wellenlängenbereich zwischen ungefähr 650 nm und 700 nm ist sehr effizient. Blau/grünes Licht im Wellenlängenbereich zwischen ungefähr 400 nm und 475 nm ist ebenfalls effizient. Grün/gelbes Licht im Wellenlängenbereich zwischen ungefähr 475 nm und 550 nm ist jedoch weniger effizient. Unterschiede von Pflanzenkultur zu Pflanzenkultur beziehungsweise von Pflanze zu Pflanze sollten des Weiteren ebenfalls berücksichtigt werden.

Trotzdem brauchen Pflanzen dennoch ein möglichst ausgeglichenes Lichtspektrum. Ein zu geringer Blaulichtanteil führt dazu, dass die Pflanze 'schießt' (übermäßiges Stängelwachstum) oder ihre Blätter sich gelb verfärben können. Auch das Verhältnis rot/tiefrot ist für die Pflanzenentwicklung wichtig. Ein niedriger Tiefrotanteil schränkt das Stängelwachstum ein. Diese Sensibilität kann von Pflanzenkultur zu Pflanzenkultur beziehungsweise von Pflanze zu Pflanze unterschiedlich sein.

Eine Funktionsschicht kann dabei zum Beispiel jede Schicht umfassen, welche die Transmission einer Verglasung in mindestens einem bestimmten Wellenlängenbereich oder den Anteil an diffusem Durchlicht beziehungsweise diffusem transmittiertem Licht verändert und/oder in irgendeiner Weise beeinflusst.

In einer besonders bevorzugten Ausführungsform der Erfindung kann eine Funktionsschicht zum Beispiel mindestens eine Metall- und/oder Metalloxidschicht umfassen. Eine solche Schicht zur Anpassung der Transmission mindestens eines Teils der Verglasung des erfindungsgemäßen Gewächshaussystems an den PAR-Bereich der jeweiligen Pflanzenkultur kann dabei zum Beispiel eine speziell an die jeweilige Pflanzenkultur angepasste Low-E-Schicht sein, welche normalerweise nur Infrarotstrahlen reflektiert und/oder absorbiert und hier jedoch zur Anpassung der Transmission an den PAR-Bereich der jeweiligen Pflanzenkultur beziehungsweise zur Beeinflussung der Transmission, der Reflexion und der Absorption im gesamten Wellenlängenbereich verwendet werden kann. Eine solche Schicht kann dabei bevorzugt mindestens eine Metall- und/oder Metalloxidschicht, insbesondere eine Silberschicht, umfassen.

Die Dicke der Metall- und/oder Metalloxidschicht kann dabei zum Beispiel zwischen 1 nm und 65 nm, bevorzugt zwischen 3 nm und 50 nm, weiter bevorzugt zwischen 4 und 40 nm, weiter bevorzugt zwischen 5 nm und 30 nm, weiter bevorzugt zwischen 6 nm und 25 nm, weiter bevorzugt zwischen 7 nm und 20 nm, weiter bevorzugt zwischen 8 nm und 17 nm, weiter bevorzugt zwischen 11 nm und 16 nm, weiter bevorzugt zwischen 12 nm und 15 nm, besonders bevorzugt zwischen 13 nm und 14 nm, betragen.

In einer weiteren Ausführungsform der Erfindung kann eine Funktionsschicht auch eine gegebenenfalls einzelne Metalloxischicht und insbesondere mindestens eine TCO-Schicht, wie zum Beispiel eine Zinkoxidschicht oder Zinnoxidschicht gegebenenfalls mit Fluor beziehungsweise mindestens einer Fluorverbindung dotiert, umfassen. Solche Schichten können als Funktionsschichten als Alternative zu Low-E-Schichten oder Low-E-Schichtaufbauten beziehungsweise zu Silberschichten verwendet werden. Dabei handelt es sich bei diesen Schichten zum Beispiel vorzugsweise um eine 100 nm bis 900 nm bevorzugt 500 nm dicke einzelne Schicht. Diese Schicht kann dabei bevorzugt als Halbleiterschicht aufgebracht werden.

In einer bevorzugten Ausführungsform der vorliegenden Erfindung kann eine Funktionsschicht mindestens zwei Metall- und/oder Metalloxidschichten umfassen. Ein Oxid im Sinne der vorliegenden Erfindung kann dabei gegebenenfalls zum Beispiel auch entsprechende Suboxide beziehungsweise substöchiometrische Oxide umfassen. In einer weiter bevorzugten Ausführungsform der vorliegenden Erfindung kann eine Funktionsschicht mindestens zwei Metall- und/oder Metalloxidschichten mit unterschiedlichen Dicken umfassen. Durch die Variation der einzelnen Schichtdicken kann dabei eine Anpassung an den PAR-Bereich der jeweiligen Pflanzenkultur beziehungsweise eine hohe Transmission in den wichtigen, da für die Fotosynthese besonders effizienten Wellenlängenbereichen von 400 nm bis 475 nm und von 600 nm bis 700 nm zu erreicht werden. Je mehr Schichten verwendet werden, umso mehr Parameter können verändert und/oder gegebenenfalls aufeinander abgestimmt werden um eine besonders flexible und/oder effiziente und/oder genaue Anpassung an den PAR-Bereich der jeweiligen Pflanzenkultur beziehungsweise eine hohe Transmission in den wichtigen, da für die Fotosynthese besonders effizienten Wellenlängenbereichen, von 400 nm bis 475 nm und von 600 nm bis 700 nm zu ermöglichen.

In einer bevorzugten Ausführungsform der vorliegenden Erfindung kann eine Funktionsschicht mindestens eine Silberschicht umfassen. Diese Silberschicht kann dabei die Reflexion und die Transmission mindestens eines Teils der Verglasung des erfindungsgemäßen Gewächshaussystems im gesamten Wellenlängenbereich beeinflussen.

Die Dicke der Silberschicht kann dabei zum Beispiel zwischen 1 nm und 65 nm, bevorzugt zwischen 2,5 nm und 50 nm, weiter bevorzugt zwischen 3 und 40 nm, weiter bevorzugt zwischen 3,5 nm und 37,5 nm, weiter bevorzugt zwischen 4 nm und 35 nm, weiter bevorzugt zwischen 4,5 nm und 32,5 nm, weiter bevorzugt zwischen 5 nm und 30 nm, weiter bevorzugt zwischen 6 nm und 25 nm, weiter bevorzugt zwischen 7 nm und 20 nm, weiter bevorzugt zwischen 8 nm und 17 nm, weiter bevorzugt zwischen 11 nm und 16 nm, weiter bevorzugt zwischen 12 nm und 15 nm, besonders bevorzugt zwischen 13 nm und 14 nm, betragen.

Bei einer dünnen Silberschicht ist die Transmission der Silberschicht allgemein im Vergleich zu einer dickeren Silberschicht höher. Zudem kann zum Beispiel die Transmission im PAR-Bereich und insbesondere im Wellenlängenbereich zwischen 600 nm und 800 nm bei einer dünnen Silberschicht im Vergleich zu einer dickeren Silberschicht höher sein.

Durch eine Variation der Dicke der Silberschicht kann die Transmission der Verglasung an den PAR-Bereich der jeweiligen Pflanzenkultur beziehungsweise der jeweiligen Pflanze angepasst werden. Zudem kann dadurch eine hohe Transmission in den wichtigen, da für die Fotosynthese besonders effizienten Wellenlängenbereichen, von 400 nm bis 475 nm und von 600 nm bis 700 nm erreicht werden. Darüber hinaus kann auch die Transmission von IR-Strahlung insbesondere im nahen Infrarotbereich bei einer Wellenlänge von 700 nm bis 50 µm, bevorzugt 780 nm bis 1400 nm durch eine Silberschicht beziehungsweise die Variation der Dicke der Silberschicht reduziert werden. Demzufolge kann ein Aufheizen des Gewächshaussystems zum Beispiel bei starker Lichteinstrahlung reduziert werden.

Dadurch kann der Wärmestress, welcher durch einen erhöhten Wasserbedarf zum Kühlen der Blätter auftreten kann, für die Kultur(en) reduziert werden. Der Ertrag kann dabei bei weniger Stress erhöht werden. Zudem kann dabei bei möglichst hoher Transmission im PAR-Bereich der Wasserbedarf für die Kultur zum Beispiel um 5 % bis 50 % bevorzugt um 10 % bis 30 % reduziert werden. Jedoch sollte berücksichtigt werden, dass die Silberschicht(en) gemäß der vorliegenden Erfindung zur Anpassung der Transmission der Verglasung an den PAR-Bereich der jeweiligen Pflanzenkultur beziehungsweise der jeweiligen Pflanze beziehungsweise zum Erreichen einer hohe Transmission in den wichtigen, da für die Fotosynthese besonders effizienten Wellenlängenbereichen, von 400 nm bis 475 nm und von 600 nm bis 700 nm verwendet wird. Sollten sich daraus eine höhere Transmission im IR-Bereich oder Verfärbungen im Vergleich zu einer konventionell als Low-E-Schicht verwendeten Silberschicht ergeben, so kann dieses in Kauf genommen werden, um eine besonders gute Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu erreichen.

Der Widerstand der Silberschicht kann dabei bevorzugt zum Beispiel zwischen 0,5 Ω² und 30 Ω², weiter bevorzugt zwischen 1 Ω² und 25 Ω², weiter bevorzugt zwischen 1,5 Ω² und 20 Ω², weiter bevorzugt zwischen 2 Ω² und 15 Ω², weiter bevorzugt zwischen 2,5 Ω² und 10 Ω², weiter bevorzugt zwischen 2,75 Ω² und 6 Ω², weiter bevorzugt zwischen 2,9 Ω² und 5 Ω², besonders bevorzugt zwischen 3 Ω² und 4,5 Ω² liegen. Dabei ermöglicht es ein besonders niedriger Widerstand der Silberschicht eine besonders hohe Transmission im PAR-Bereich und bevorzugterweise eine niedrige Transmission im IR-Bereich und insbesondere im nahen IR-Bereich zu erreichen.

In einer besonders bevorzugten Ausführungsform des Gewächshaussystems gemäß der vorliegenden Erfindung kann mindestens ein Teil der Verglasung des Gewächshaussystems eine zusätzliche zweite Silberschicht umfassen.

Durch Variationen der Dicken der Silberschichten und durch deren Abstimmung aufeinander kann die Transmission der Verglasung besonders flexibel und/oder effizient und/oder genau an den PAR-Bereich der jeweiligen Pflanzenkultur beziehungsweise der jeweiligen Pflanze angepasst werden. Zudem kann dadurch eine besonders flexibel und/oder effizient und/oder genau eine hohe Transmission in den wichtigen, da für die Fotosynthese besonders effizienten Wellenlängenbereichen, von 400 nm bis 475 nm und von 600 nm bis 700 nm erreicht werden. Das ist dadurch möglich, dass bei zwei vorhandenen Silberschichten die Dicke beider Silberschichten verändert werden kann. Es gibt demnach mehr Parameter, welche verändert und/oder aufeinander abgestimmt werden können, um eine besonders flexible und/oder effiziente und/oder genaue Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu ermöglichen.

Darüber hinaus kann mindestens ein Teil der Verglasung des Gewächshaussystems mindestens eine Zinnoxidschicht umfassen. Die Zinnoxidschicht kann dabei als Interferenzschicht dienen, welche die Farbe, Reflexion und Transmission des Schichtsystems beeinflussen kann. Eine Erhöhung der Dicke dieser Schicht kann zum Beispiel zu einer Erhöhung der Reflexion und einer Reduzierung der Transmission führen. Darüber hinaus beeinflusst diese Schicht auch die Transmission im Blaubereich. Die Transmission im Blaubereich kann dabei durch eine sehr geringe Schichtdicke erhöht werden.

Zudem kann mindestens eine Titanoxidschicht beziehungsweise eine Titan(IV)-Oxidschicht zum Beispiel zwischen einer Zinnoxidschicht und einer darüber angeordneten Zinkoxidschicht vorgesehen werden. Dabei kann diese Schicht dank ihres hohen Brechungsindexes die Reflexion durch beziehungsweise innerhalb der Funktionsschicht, welche die Transmission mindestens in einem Wellenlängenbereich beeinflusst, reduzieren.

Darüber hinaus kann mindestens ein Teil der Verglasung des Gewächshaussystems mindestens eine Zinkoxidschicht umfassen. Ein Oxid im Sinne der vorliegenden Erfindung kann dabei gegebenenfalls zum Beispiel auch entsprechende Suboxide beziehungsweise substöchiometrische Oxide umfassen. Die Zinkoxidschicht kann dabei ebenfalls als Interferenzschicht dienen, welche die Farbe, Reflexion und Transmission des Schichtsystems beeinflussen kann. Eine Erhöhung der Dicke dieser Schicht kann zum Beispiel zu einer Erhöhung der Reflexion und einer Reduzierung der Transmission führen. Zudem kann eine Zinkoxidschicht auch als Kristallisationsgrundlage für die Silberschicht dienen. Durch die Verwendung einer Zinkoxidschicht als Kristallisationsgrundlage für eine Silberschicht kann eine Silberschicht erhalten werden, welche eine besonders hohe Transmission bei gleichzeitig besonders guter Isolierung beziehungsweise geringer Transmission im IR-Bereich ermöglicht. Darüber hinaus können Zinkoxidschichten auch mit Aluminium dotiert werden. Dadurch kann eine Schicht erhalten werden, welche Zinkoxid sowie Aluminiumoxid umfasst. Darüber hinaus kann dadurch die Resistenz der Schichten und insbesondere der Silberschicht gegen Korrosion beziehungsweise Oxidation erhöht werden. Schließlich kann auch der Widerstand der Silberschicht dadurch reduziert werden.

Darüber hinaus kann mindestens ein Teil der Verglasung des Gewächshaussystems mindestens eine NiCrOx-Schicht umfassen. Es handelt sich dabei um eine substöchiometrische Oxidschicht, bei der x daher bevorzugterweise < 4 sein kann. Die NiCrOx-Schicht kann eine benachbarte Silberschicht vor Korrosion beziehungsweise Oxidation schützen. Demnach kann sie dafür sorgen, dass die Silberschicht ihre Funktion über einen sehr langen Zeitraum gewährleisten kann. Eine Variation der Schichtdicke kann zudem auch die Transmission insbesondere im Wellenlängenbereich über 700 nm beeinflussen, da die NiCrOx-Schicht einen Teil der Strahlung insbesondere im Wellenlängenbereich über 700 nm absorbiert. Eine dickere NiCrOx-Schicht führt dabei zu einer reduzierten Transmission.

Alternativ kann statt einer NiCrOx-Schicht auch eine weitere Zinkoxidschicht oder eine Titanoxidschicht und insbesondere eine Titan(IV)-Oxidschicht oder eine Nioboxidschicht jeweils gegebenenfalls mit Aluminium beziehungsweise mit Aluminiumoxid dotiert über einer Edelmetall und insbesondere einer Silberschicht angeordnet werden. Diese Schichten können eine benachbarte Silberschicht vor Korrosion beziehungsweise Oxidation schützen. Demnach können sie dafür sorgen, dass die Silberschicht ihre Funktion über einen sehr langen Zeitraum gewährleisten kann. Zudem kann eine solche Schicht auch die Transmission insbesondere im PAR-Bereich erhöhen.

Darüber hinaus kann mindestens ein Teil der Verglasung des Gewächshaussystems mindestens eine ZnSn-Schicht beziehungsweise eine mit Aluminium dotierte ZnSn-Schicht, insbesondere eine ZnSnAlOₓ-Schicht umfassen. Diese Schicht kann dabei bevorzugt eine Dicke von 5 nm bis 65 nm, bevorzugt von 10 nm bis 60 nm, weiter bevorzugt von 20 nm bis 55 nm, weiter bevorzugt von 30 nm bis 50 nm, weiter bevorzugt von 35 nm bis 45 nm aufweisen. Es handelt sich dabei um eine substöchiometrische Oxidschicht, bei der x daher bevorzugterweise ≤ 4 sein kann. Diese Schicht dient dabei zum Beispiel dazu, den gesamten Schichtaufbau vor Korrosion beziehungsweise Oxidation zu schützen. Darüber hinaus beeinflusst diese Schicht jedoch ebenfalls die Transmission und Reflexion. Eine dickere Schicht führt dabei zu einer erhöhten Reflexion und zu einer reduzierten Transmission.

Alternativ dazu kann mindestens ein Teil der Verglasung des Gewächshaussystems mindestens eine Si₃N₄-Schicht umfassen. Diese Schicht ist dabei sowohl chemisch als auch mechanisch sehr widerstandsfähig und Schütz die Funktionsschicht dadurch sehr gut vor äußeren Einflüssen.

Eine beispielhafte Funktionsschicht könnte dabei zum Beispiel einen der folgenden Aufbauten umfassen:
- Glas,
- eine Zinnoxidschicht,
- eine optionale Titanoxidschicht
- eine mit Aluminium dotierte Zinkoxidschicht,
- eine Silberschicht,
- eine mit Aluminium dotierte Zinkoxidschicht beziehungsweise eine mit Aluminium dotierte Titanoxidschicht
- eine ZnSn-Schicht beziehungsweise eine mit Aluminium dotierte ZnSn-Schicht, insbesondere eine ZnSnAlOₓ-Schicht oder,
   oder
- Glas,
- eine Zinnoxidschicht,
- eine mit Aluminium dotierte Zinkoxidschicht,
- eine Silberschicht,
- eine NrCrOx-Schicht,
- eine Zinnoxidschicht,
- eine ZnSnAlOx-Schicht,
- eine Zinnoxidschicht,
- eine mit Aluminium dotierte Zinkoxidschicht,
- eine Silberschicht,
- eine NrCrOx-Schicht,
- eine Zinnoxidschicht,
- eine ZnSnAlOx-Schicht.

Ein Schichtaufbau, welcher eine NrCrOx-Schicht, eine Zinnoxidschicht, eine ZnSnAlOx-Schicht, umfasst, kann dabei als Antireflexschicht zur Entspiegelung der Silberschichten dienen. Eine Erhöhung der Dicke dieses Schichtaufbaus kann dabei zu mehr Reflexion und weniger Transmission führen.

Im Gegensatz dazu würde eine Erhöhung der Dicke der Schichtaufbauten, welche jeweils unterhalb der beiden Silberschichten angeordnet sind und jeweils eine Zinnoxidschicht, eine optionale Titanoxidschicht und eine mit Aluminium dotierte Zinkoxidschicht umfassen können, zu weniger Reflexion und mehr Transmission führen.

Die Dicke jeder dieser Schichten kann dabei zum Beispiel zwischen 1 nm und 65 nm, bevorzugt zwischen 2 nm und 50 nm, bevorzugt zwischen 3 nm und 45 nm, weiter bevorzugt zwischen 4 nm und 40 nm, weiter bevorzugt zwischen 4,5 nm und 35 nm, weiter bevorzugt zwischen 5 nm und 30 nm, weiter bevorzugt zwischen 6 nm und 25 nm, weiter bevorzugt zwischen 6,5 nm und 20 weiter bevorzugt zwischen 7 nm und 15 nm, besonders bevorzugt zwischen 8 nm und 14 nm betragen.

Je mehr Schichten verwendet werden, umso mehr Parameter können verändert und/oder gegebenenfalls aufeinander abgestimmt werden, um eine besonders flexible und/oder effiziente und/oder genaue Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu ermöglichen. Dabei können die Effekte von bestimmten Parametern die Effekte von anderen Parametern auch wieder ganz oder teilweise kompensieren.

Die Dicke jeder einzelnen dieser Schichten kann dabei verändert werden, um eine besonders flexible und/oder effiziente und/oder genaue Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu ermöglichen. Zudem kann jede dieser Schichten zum Beispiel durch Sputtern oder Bedampfen hergestellt werden.

Des Weiteren umfasst eine Funktionsschicht auch eine Schicht, welche den Anteil an diffusem Durchlicht beziehungsweise diffusem transmittiertem Licht beeinflusst. Eine solche Funktionsschicht kann dabei zum Beispiel eine bevorzugterweise relativ stark aufgeraute Glasscheibe insbesondere eine zum Beispiel durch ein Ätzverfahren bevorzugterweise relativ stark aufgeraute Glasscheibe beziehungsweise eine Milchglasscheibe, eine transluzente Glasscheibe mit Pigmenten, eine strukturierte Glasscheibe beziehungsweise eine Glasscheibe mit einer bestimmten Oberflächenstruktur, wie zum Beispiel eine Nörpelglasscheibe, eine aufgeraute Polymerfolie oder eine transluzente Polymerfolie umfassen. Umso aufgerauter die Glasscheibe oder die Polymerfolie, umso höher wird der Anteil an diffusem Durchlicht. Darüber hinaus kann der Anteil an diffusem Durchlicht anhand des Motivs beziehungsweise der Struktur des Nörpelglases variiert werden. Zudem lässt sich der Anteil an diffusem Durchlicht zum Beispiel dadurch variieren, dass die Verglasung eine oder mehrere bevorzugt genau zwei strukturierte beziehungsweise relative stark aufgeraute Glasscheiben, insbesondere zum Beispiel Nörpelglasscheiben umfassen kann. Diese Glasscheiben können dabei bevorzugt parallel zueinander gegebenenfalls auf Abstand angeordnet und miteinander verbunden sein, um die Verglasung zu bilden. Bevorzugt können diese Glasscheiben dabei zum Beispiel eine Isolierverglasung bilden, welche als Verglasung verwendet werden kann. Die Verwendung von zwei Nörpelglasscheiben erhöht dabei den Anteil an diffusem Durchlicht im Vergleich zur Verwendung einer Nörpelglasscheibe. Des Weiteren kann der Anteil an diffusem Durchlicht noch dadurch variiert werden, dass eine oder mehrere Glasscheiben entweder einseitig oder beidseitig strukturiert beziehungsweise oberflächenstrukturiert sein können. Sofern dabei zum Beispiel beidseitig strukturiertes Nörpelglas verwendet wird, kann der Anteil an diffusem Durchlicht im Vergleich zu Verwendung von einseitig strukturiertem Nörpelglas erhöht werden. Alternativ kann der Anteil an diffusem Durchlicht auch dadurch variiert werden, dass ein anderes transluzentes Polymermaterial verwendet wird oder dass der Anteil oder die Art der Pigmente im und/oder auf dem Polymermaterial beziehungsweise in und/oder auf der Glasscheibe verändert wird. Beispielsweise kann eine transluzente PVB-Folie als Funktionsschicht verwendet werden, um den Anteil an diffusem Durchlicht beziehungsweise diffusem transmittiertem Licht zu erhöhen.

Dabei kann transluzent im Sinne der vorliegenden Erfindung die partielle Lichtdurchlässigkeit eines Körpers bei gleichzeitig auftretender Streuung und insbesondere Volumenstreuung der durchscheinenden Lichtstrahlen beschreiben. In Abgrenzung zur Transparenz kann man Transluzenz als Lichtdurchlässigkeit beschreiben und Transparenz als Bild- oder Blickdurchlässigkeit. Die Volumenstreuung kann dabei zum Beispiel dadurch entstehen, dass transluzente Körper teilweise lichtdurchlässig sind. Im Gegensatz zu lichtundurchlässigen Körpern reflektieren sie auftreffendes Licht daher nicht nur direkt an ihrer Oberfläche, sondern teils erst, nachdem es in den Körper eingedrungen ist. Dabei entsteht die Volumenstreuung dadurch, dass das Licht nicht nur am Eintrittspunkt mit einem dem Eintrittswinkel gleichen Winkel in entgegengesetzter Richtung reflektiert wird, sondern an einem beliebigen Punkt in einer beliebigen Richtung mit einem beliebigen Winkel in Folge der Reflexion austritt, sodass die gegebenenfalls vorhandene parallele Ausrichtung der Lichtstrahlen des eintreffenden Lichtes gestört wird.

Der Anteil an diffusem Durchlicht beziehungsweise diffusem transmittiertem Licht kann dabei zwischen 10% und 100 %, bevorzugt zwischen 10% und 90%, weiter bevorzugt zwischen 15% und 85%, weiter bevorzugt zwischen 20% und 80%, weiter bevorzugt zwischen 25% und 75%, weiter bevorzugt zwischen 30% und 70%, weiter bevorzugt zwischen 35% und 65%, weiter bevorzugt zwischen 40% und 60%, besonders bevorzugt zwischen 45% und 55% variiert werden.

Dank verschiedener Materialien und Parameter, wie zum Beispiel die Rauheit, die Verwendung von Pigmenten und/oder die Art der Pigmente und/oder den Anteil an Pigmenten, kann der Anteil an diffusem Durchlicht beziehungsweise diffusem transmittiertem Licht sehr gut an das Optimum für die jeweilige Pflanzenkultur beziehungsweise für die jeweilige Pflanze angenähert werden.

In einer besonderen Ausführungsform des erfindungsgemäßen Gewächshaussystems kann mindestens eine Funktionsschicht, welche den Anteil an diffusem Durchlicht beziehungsweise diffusem transmittiertem Licht beeinflusst, innerhalb einer VSG-Glasscheibenanordnung angeordnet werden. Dies ist möglich, da zum Beispiel eine transluzente PVB-Folie als Funktionsschicht, welche den Anteil an diffusem Durchlicht beziehungsweise diffusem transmittiertem Licht beeinflusst, verwendet werden kann. Dabei verbindet diese transluzente PVB-Folie beide Glasscheiben der eine VSG-Glasscheibenanordnung genauso fest miteinander wie eine transparente PVB-Folie.

In einer besonderen Ausführungsform des erfindungsgemäßen Gewächshaussystems kann mindestens eine Funktionsschicht und insbesondere eine Funktionsschicht, welche die Transmission in mindestens einem bestimmten Wellenlängenbereich beeinflusst, bevorzugt zum Beispiel im IR-Bereich, insbesondere zum Beispiel eine Low-E-Schicht oder ein Low-E-Schichtaufbau, zum Beispiel auf einer der Außenseite des Gewächshaussystems nahen Glasscheibe der Verglasung des Gewächshaussystems und insbesondere auf der Innenseite beziehungsweise der dem Innenraum des Gewächshaussystems zugewandten Seite dieser Glasscheibe aufgebracht werden. Dadurch kann zum Beispiel die Isolierung des Innenraums des Gewächshaussystems gegebenenfalls verbessert beziehungsweise Transmission im IR-Bereich reduziert werden. Durch die besondere Anordnung der Funktionsschicht kann gegebenenfalls die Aufwärmung des Innenraums des Gewächshaussystems zum Beispiel starker Lichteinstrahlung reduziert werden, da weniger IR-Strahlung in das Gewächshaussystem eindringt.

In einer weiteren besonderen Ausführungsform des erfindungsgemäßen Gewächshaussystems kann mindestens eine Funktionsschicht und insbesondere eine Funktionsschicht, welche die Transmission in mindestens einem bestimmten Wellenlängenbereich beeinflusst, bevorzugt zum Beispiel im IR-Bereich, insbesondere zum Beispiel eine Low-E-Schicht oder ein Low-E-Schichtaufbau, auf einer dem Innenraum des Gewächshaussystems nahen Glasscheibe der Verglasung des Gewächshaussystems und insbesondere auf der von Innenraum des Gewächshaussystems abgewandten Seite dieser Glasscheibe aufgebracht werden. Dadurch kann die Isolierung des Innenraums des Gewächshaussystems gegebenenfalls verbessert beziehungsweise Transmission im IR-Bereich reduziert werden. Durch die besondere Anordnung der Funktionsschicht kann gegebenenfalls die Abkühlung des Innenraums des Gewächshaussystems zum Beispiel geringer Lichteinstrahlung und/oder bei niedrigen Außentemperaturen reduziert werden, da weniger IR-Strahlung das Gewächshaussystem verlässt.

Mindestens ein Teil der Verglasung des Gewächshaussystems umfasst mindestens zwei parallel angeordnete und miteinander verbundene Glasscheiben, welche mindestens einen abgeschlossenen Zwischenraum beziehungsweise eine Isolierverglasung bilden. Dabei sind mindestens zwei vorzugsweise parallel angeordnete und miteinander verbundene Glasscheiben, welche mindestens einen abgeschlossenen Zwischenraum bilden, zur Bildung einer Isolierverglasung auf Distanz zueinander angeordnet. Des Weiteren kann mindestens ein Teil der Verglasung des erfindungsgemäßen Gewächshaussystems auch mindestens drei parallel angeordnete und miteinander verbundene Glasscheiben, welche mindestens zwei abgeschlossene Zwischenräume bilden, umfassen.

Im Zwischenraum zwischen den auf Distanz angeordneten Glasscheiben der Isolierverglasung kann dabei zum Beispiel ein Unterdruck beziehungsweise ein Vakuum herrschen. Alternativ kann der Zwischenraum zwischen den auf Distanz angeordneten Glasscheiben der Isolierverglasung mit einem Gas beziehungsweise Gasgemisch wie zum Beispiel Luft, Ar, Xe, Kr oder Mischungen davon gefüllt sein. Die Distanz zwischen zwei auf Distanz zueinander parallel angeordneten und miteinander verbundenen Glasscheiben zur Bildung einer Isolierverglasung kann dabei zum Beispiel zwischen 2 mm und 30 mm, bevorzugt zwischen 4 mm und 20 mm, weiter bevorzugt zwischen 7 mm und 18 mm, weiter bevorzugt zwischen 8 mm und 16 mm, weiter bevorzugt zwischen 10 mm und 14 mm, besonders bevorzugt zwischen 12 mm und 13 mm betragen. Dadurch, dass mindestens ein Teil der Verglasung des Gewächshaussystems mindestens zwei vorzugsweise parallel auf Distanz angeordnete und miteinander verbundene Glasscheiben, welche mindestens einen abgeschlossenen Zwischenraum beziehungsweise eine Isolierverglasung bilden, umfasst, kann die Isolierung des Gewächshaussystems stark verbessert werden. Daher sinken die Energiekosten zum Heizen beziehungsweise zum Kühlen des Gewächshaussystems.

In einer weiteren besonderen Ausführungsform des erfindungsgemäßen Gewächshaussystems kann mindestens ein Teil der Verglasung des Gewächshaussystems eine bruchsichere Schicht umfassen. Bevorzugterweise kann eine bruchsichere Schicht dabei mindestens eine zwischen zwei Glasscheiben angeordnete Polymerfolie umfassen, wobei die Polymerfolie beide Glasscheiben bevorzugterweise fest miteinander verbindet. Dadurch können der Bruch der Verglasung und insbesondere der Durchbruch durch die Verglasung zum Beispiel beim Betreten der Verglasung zum Beispiel während der Reinigung, weitestgehend verhindert werden.

In einer weiteren besonderen Ausführungsform des erfindungsgemäßen Gewächshaussystems kann mindestens ein Teil der Verglasung des Gewächshaussystems auch gehärtetes Glas umfassen. Dadurch kann das Risiko eines Bruchs der Verglasung bei einer entsprechenden Belastung reduziert werden, ohne das Gewicht der Verglasung wesentlich zu erhöhen.

In einer besonders bevorzugten Ausführungsform des erfindungsgemäßen Gewächshaussystems kann mindestens ein Teil der Verglasung des Gewächshaussystems mindestens eine zwischen zwei Glasscheiben angeordnete Polyvinylbutyralfolie (PVB-Folie) umfassen, welche diese Glasscheiben bevorzugterweise fest miteinander verbindet, sodass mindestens ein Teil der Verglasung des Gewächshaussystems mindestens eine VSG-Glasscheibenanordnung (Verbundsicherheitsglas) umfasst. Dadurch können der Bruch der Verglasung und insbesondere der Durchbruch durch die Verglasung, zum Beispiel beim Betreten der Verglasung zum Beispiel während der Reinigung, weitestgehend verhindert werden. Dabei kann die VSG-Glasscheibenanordnung bevorzugterweise nahe der Außenseite der Verglasung des erfindungsgemäßen Gewächshaussystems angeordnet sein. Jedoch kann das Gewicht der Verglasung durch eine VSG-Glasscheibenanordnung gegebenenfalls erhöht werde.

Mindestens ein Teil der Verglasung des Gewächshaussystems umfasst mindestens eine Maßnahme zur Reduzierung der Lichtreflexion. Dabei kann jede Schicht oder Behandlung, welche die Reflexion von Licht und insbesondere von Licht im PAR-Bereich reduziert, als eine Maßnahme zur Reduzierung der Lichtreflexion verwendet werden. Insbesondere kann zum Beispiel die Oberfläche einer Glasscheibe zur Reduzierung der Reflexion zum Beispiel durch Ätzen vorzugsweise leicht aufgeraut werden, bevorzugterweise so, dass der Anteil an diffusem Durchlicht dadurch weitgehend unverändert bleibt, beziehungsweise nur in einem geringen Maße zum Beispiel um weniger als 50 %, bevorzugt um weniger als 25 %, weiter bevorzugt um weniger als 10 %, weiter bevorzugt um weniger als 5 %, weiter bevorzugt um weniger als 3 %, weiter bevorzugt um weniger als 1 %, weiter bevorzugt um weniger als 0,6 %, weiter bevorzugt um weniger als 0,5 %, weiter bevorzugt um weniger als 0,3 %, besonders bevorzugt um weniger als 0,2 % , verändert wird. Darüber hinaus können zum Beispiel eine Schicht beziehungsweise ein Schichtaufbau auf Basis von SiO₂ und TiO₂ und insbesondere ein Vierschichtaufbau, welcher eine Schicht SiO₂, eine darüber angeordnete Schicht TiO₂, eine wiederum darüber angeordnete Schicht SiO₂ und eine abschließend darüber angeordnete Schicht TiO₂ umfasst, oder eine Beschichtung mit SiO₂-Nanopartikeln beziehungsweise Gelen davon oder eine zum Beispiel durch Plasmapolymerisation hergestellte SiO₂-Schicht zur Reduzierung der Lichtreflexion verwendet werden. Durch eine Maßnahme zur Reduzierung der Lichtreflexion kann die Transmission allgemein erhöht werden, sodass mehr Licht auf die Pflanzenkultur fällt. Dabei sollte berücksichtigt werden, dass mehr Licht auch einen höheren Kulturertrag bedeutet. Eine Maßnahme zur Reduzierung der Lichtreflexion kann dabei bevorzugt an der Außenseite der Verglasung des Gewächshaussystems vorgenommen werden.

In einer weiteren besonderen Ausführungsform des erfindungsgemäßen Gewächshaussystems kann mindestens eine Maßnahme zur Reduzierung der Reflexion bevorzugt zum Beispiel eine beispielsweise durch ein Ätzverfahren aufgeraute Oberfläche, eine Antireflexschicht oder ein Antireflexschichtaufbau, auf einer dem Innenraum des Gewächshaussystems nahen Glasscheibe der Verglasung des Gewächshaussystems aufgebracht werden. Dadurch kann die Transmission der Verglasung erhöht werden. Bevorzugt kann eine solche Maßnahme beziehungsweise Schicht dabei auf beiden Seiten einer dem Innenraum des Gewächshaussystems nahen Glasscheibe der Verglasung des Gewächshaussystems aufgebracht werden. Dadurch kann die Transmission der Verglasung noch weiter erhöht werden.

Zudem kann die Transmission auch durch die Dicke der verwendeten Glasscheiben beeinflusst werden. Dünnere Glasscheiben ermöglichen dabei eine höhere Transmission. Jedoch sollte bei der Verwendung von dünneren Glasscheiben darauf geachtet werden, dass eine ausreichende mechanische Stabilität der Verglasung erhalten bleibt.

Die Dicke einer Glasscheibe der Verglasung des Gewächshaussystems kann dabei zum Beispiel zwischen 1 mm und 40 mm, bevorzugt zwischen 1, 2 mm und 30 mm, weiter bevorzugt zwischen 1,3 mm und 20 mm, weiter bevorzugt zwischen 1, 4 mm und 15 mm, weiter bevorzugt zwischen 1, 5 mm und 10 mm, weiter bevorzugt zwischen 1,6 mm und 8 mm, weiter bevorzugt zwischen 1,7 mm und 6 mm, weiter bevorzugt zwischen 1, 9 mm und 5 mm, besonders bevorzugt zwischen 2 und 4 mm betragen. Dadurch kann der Anteil an Durchlicht beeinflusst werden, da dünnere Glasscheiben im Vergleich zu dickeren Glasscheiben eine höhere Transmission ermöglichen.

In einer weiteren Ausführungsform des erfindungsgemäßen Gewächshaussystems kann mindestens ein Teil der Verglasung des Gewächshaussystems mindestens zwei beziehungsweise genau zwei vorzugsweise parallel auf Distanz angeordnete Glasscheiben beziehungsweise eine Isolierverglasung umfassen, wobei gegebenenfalls zum Beispiel auch Glasscheiben mit unterschiedlichen Dicken verwendet werden können. Bevorzugt kann dabei eine dem Innenraum des Gewächshauses nahe Glasscheibe dünner seine als eine der Außenseite des Gewächshaussystems nahe Glasscheibe. Durch eine dickere Glasscheibe nahe der Außenseite des Gewächshaussystems lässt sich dabei sicherstellen, dass die Stabilität der Verglasung gegenüber äußeren Einwirkungen ausreichend ist. Zudem kann eine dünnere Glasscheibe nahe dem Innenraum des Gewächshaussystems jedoch dazu beitragen die Transmission zu erhöhen.

Darüber hinaus umfasst mindestens ein Teil der Verglasung des Gewächshaussystems mindestens eine Glasscheibe, welche arm an Stoffen, die Strahlung mit einer Wellenlänge von 10 nm bis 1,1 mm, bevorzugt von 300 nm bis 800 nm, besonders bevorzugt von 400 nm bis 700 nm absorbieren, ist. Solche Stoffe können dabei insbesondere zum Beispiel Eisen und/oder Oxide, bevorzugt Eisenoxide, weiter bevorzugt an Fe₂O₃ umfassen. Arm an Stoffen, die Strahlung mit einer Wellenlänge von 10 nm bis 1,1 mm, bevorzugt von 300 nm bis 800 nm, besonders bevorzugt von 400 nm bis 700 nm absorbieren, bedeutet dabei, dass der Gehalt an solchen Stoffen , weniger als 0,1 %, bevorzugt weniger als 0,05 %, weiter bevorzugt weniger als 0,03 %, weiter bevorzugt weniger als 0,02 %, weiter bevorzugt weniger als 600 ppm, weiter bevorzugt weniger als 100 ppm, weiter bevorzugt weniger als 50 ppm, weiter bevorzugt weniger als 20 ppm, besonders bevorzugt weniger als 10 ppm betragen kann. Dadurch kann die Transmission insbesondere im PAR-Bereich weiter erhöht werden.

In einer weiteren Ausführungsform des erfindungsgemäßen Gewächshaussystems kann mindestens ein Teil der Verglasung des Gewächshaussystems mindestens zwei beziehungsweise gegebenenfalls genau zwei Glasscheiben, umfassen, welche arm an Stoffen, die Strahlung mit einer Wellenlänge von 10 nm bis 1,1 mm, bevorzugt von 300 nm bis 800 nm, besonders bevorzugt von 400 nm bis 700 nm absorbieren, sind. Dadurch kann die Transmission insbesondere im PAR-Bereich noch weiter erhöht werden.

In einer weiteren Ausführungsform des erfindungsgemäßen Gewächshaussystems kann mindestens ein Teil der Verglasung des Gewächshaussystems zum Beispiel eine Transmission im PAR-Bereich zwischen 60 % und 99,9 %, bevorzugt zwischen 70 % und 95 %, weiter bevorzugt zwischen 77,5 % und 94 %, weiter bevorzugt zwischen 79% und 93 %, weiter bevorzugt zwischen 80 % und 92,5%, weiter bevorzugt zwischen 82,5 % und 92,4 %, weiter bevorzugt zwischen 84 % und 92,3 %, weiter bevorzugt 85 % und 92 %, weiter bevorzugt 88 % bis 91 % aufweisen. Eine höhere Transmission im PAR-Bereich kann dabei zu einem besseren Ertrag der Kulturen führen.

In einer weiteren Ausführungsform des erfindungsgemäßen Gewächshaussystems kann mindestens ein Teil der Verglasung des Gewächshaussystems zum Beispiel eine Transmission gemäß der Norm EN410 zwischen 60 % und 99,9 %, bevorzugt zwischen 70 % und 95 %, weiter bevorzugt zwischen 77,5 % und 94 %, weiter bevorzugt zwischen 80% und 93 %, weiter bevorzugt zwischen 82,5 % und 92,5%, weiter bevorzugt 85 % und 92,4 %, weiter bevorzugt zwischen 86 % und 92,3 %, weiter bevorzugt zwischen 87 % und 92,2 %, weiter bevorzugt 88 % und 92 %, weiter bevorzugt 89 % bis 91 % aufweisen. Eine höhere Transmission kann dabei zu einem besseren Ertrag der Kulturen führen. Jedoch kann eine hohe Transmission insbesondere im IR-Bereich auch zu Verbrennungen an den Kulturen führen.

In einer weiteren Ausführungsform des erfindungsgemäßen Gewächshaussystems kann mindestens ein Teil der Verglasung des Gewächshaussystems zum Beispiel einen Ug-Wert zwischen 0,3 W/m².K und 35 W/m².K, bevorzugt zwischen 0,5 W/m².K und 25 W/m².K, weiter bevorzugt zwischen 0,7 W/m².K und 20 W/m².K, weiter bevorzugt zwischen 0,8 W/m².K und 16 W/m².K, weiter bevorzugt zwischen 0,85 W/m².K und 16 W/m².K, weiter bevorzugt zwischen 0,9 W/m².K und 10 W/m².K, weiter bevorzugt zwischen 0,95 W/m².K und 5 W/m².K, weiter bevorzugt zwischen 1 W/m².K und 3 W/m².K, weiter bevorzugt zwischen 1,05 W/m².K und 2 W/m².K, weiter bevorzugt zwischen 1,07 W/m².K und 1,5 W/m².K, besonders bevorzugt zwischen 1,1 W/m².K und 1,3 W/m².K aufweisen. Ein niedriger Ug-Wert kann dabei zu einer besseren Isolierung führen. Dadurch muss das Gewächshaussystem gegebenenfalls zum Beispiel im Winter weniger geheizt und im Sommer weniger gekühlt werden.

In einer weiteren Ausführungsform des erfindungsgemäßen Gewächshaussystems kann mindestens ein Teil der Verglasung des Gewächshaussystems zum Beispiel einen g-Wert zwischen 25 % und 90 %, bevorzugt zwischen 30 % und 80%, weiter bevorzugt zwischen 35 % und 75 %, weiter bevorzugt zwischen 40 % und 70 %, weiter bevorzugt zwischen 42 % und 68 %, weiter bevorzugt zwischen 45 % und 67 %, weiter bevorzugt zwischen 48 % und 66 %, weiter bevorzugt zwischen 49 % und 65 %, weiter bevorzugt zwischen 50 % und 64 %, besonders bevorzugt zwischen 53 % und 63 % aufweisen. Ein hoher g-Wert führt kann dabei zu einem hohen Solargewinn führen. Dadurch kann zum Beispiel die Notwendigkeit des Heizens im Winter weiter reduziert werden.

In einer besonders bevorzugten Ausführungsform des erfindungsgemäßen Gewächshaussystems kann mindestens ein Teil der Verglasung des Gewächshaussystems mindestens eine Schicht zur Reduzierung der Bildung von Kondenswassertropfen umfassen. Eine solche Schicht kann zum Beispiel eine beliebige hydrophobe oder superhydrophobe Schicht umfassen. Eine solche hydrophobe Schicht kann dabei zum Beispiel hydrophobe und insbesondere fluorierte Silane umfassen. Durch eine Schicht zur Reduzierung der Bildung von Kondenswassertropfen, welche bevorzugterweise auf der Innenseite der Verglasung des Gewächshaussystems angebracht werden kann, kann die Beschädigung (Bildung von braunen Flecken) der kultivierten Pflanzen durch herabtropfendes Kondenswasser weitestgehend verhindert werden.

In einer besonders bevorzugten Ausführungsform des erfindungsgemäßen Gewächshaussystems kann mindestens ein Teil der Verglasung des Gewächshaussystems so ausgestaltet sein, dass Lichtquellen und besonders bevorzugt Leuchtdioden und/oder OLED-Folien, welche bevorzugt im PAR-Bereich der jeweiligen Pflanzenkultur emittieren, entweder in der Verglasung selbst integriert (zum Beispiel als Leuchtdioden innerhalb einer Isolierverglasung, insbesondere über die Fläche dieser Verglasung verteilt) oder am Rande der Verglasung insbesondere zum Beispiel innerhalb des Rahmens der Verglasung angebracht werden können, sodass sie die Verglasung und insbesondere die darunter liegende(n) Pflanzenkultur(en) bestrahlen können. Dabei können Leuchtdioden so angebracht werden, dass sie ihr Licht direkt auf die Pflanzenkultur(en) und/oder über den Rand einer Glasscheibe in die Glasscheibe hinein und damit indirekt auf die Pflanzenkulturen abgeben. Dadurch kann das Pflanzenwachstum auch bei geringer Lichteinstrahlung insbesondere in der Nacht angeregt werden. Daraus ergeben sich ein schnelleres Pflanzenwachstum und ein höherer Ertrag.

In einer besonders bevorzugten Ausführungsform des erfindungsgemäßen Gewächshaussystems kann das Gewächshaussystem mindestens zwei verschiedene Zonen umfassen. Dabei kann eine Zone jeder Teil des Gewächshaussystems sein, welcher sich von mindestens einem angrenzenden Teil durch mindestens eine Eigenschaft unterscheidet. Insbesondere kann sich eine Zone des Gewächshaussystems von mindestens einer benachbarten Zone dabei zum Beispiel durch die Temperatur, die Luftfeuchtigkeit, die vorhandene Pflanzenkultur, die logistische Gestaltung und die Art der Verglasung unterscheiden. Dadurch können mehrere unterschiedliche Pflanzenkulturen in einem einzigen Gewächshaussystem unter optimalen Bedingungen kultiviert werden.

In einer besonders bevorzugten Ausführungsform des erfindungsgemäßen Gewächshaussystems kann das Gewächshaussystem mindestens zwei verschiedene Zonen mit unterschiedlichen Verglasungen umfassen, welche gegebenenfalls dank unterschiedlicher erfindungsgemäßer Funktionsschichten an die in der jeweiligen Zone befindlichen Pflanzenkultur angepasst sind. Dadurch können mehrere unterschiedliche Pflanzenkulturen in einem einzigen Gewächshaussystem unter optimalen Bedingungen mit einem hohen Ertrag kultiviert werden.

### Kurze Beschreibung der Zeichnungen:

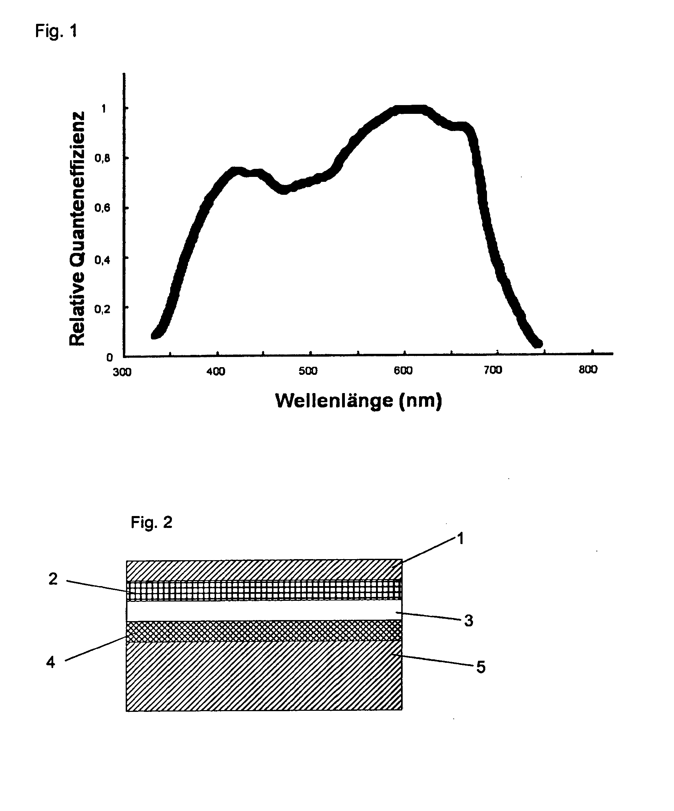

Fig. 1 stellt die Effizienz einer elektromagnetischen Strahlung für die Fotosynthese als Funktion der Wellenlänge dar. Der PAR-Bereich umfasst dabei zumeist zum Beispiel einen Wellenlängenbereich von 300 nm bis 800 nm, bevorzugt von 400 nm bis 700 nm. Innerhalb dieses Bereiches tragen bestimmte Wellenlängen nochmals in besonders effizienter Weise zur Fotosynthese und damit zum Pflanzenwachstum bei. Das gelb/orange Licht im Wellenlängenbereich zwischen ungefähr 550 nm und 600 nm insbesondere zwischen 600 nm und 650 nm ist dabei besonders effizient. Auch rotes Licht im Wellenlängenbereich zwischen ungefähr 650 nm und 700 nm ist sehr effizient. Blau/grünes Licht im Wellenlängenbereich zwischen ungefähr 400 nm und 475 nm ist ebenfalls effizient. Grün/gelbes Licht im Wellenlängenbereich zwischen ungefähr 475 nm und 550 nm ist jedoch weniger effizient. Unterschiede von Pflanzenkultur zu Pflanzenkultur beziehungsweise von Pflanze zu Pflanze sollten des Weiteren ebenfalls berücksichtigt werden.
Fig. 2 zeigt einen beispielhaften Schichtaufbau für eine Funktionsschicht, welche die Transmission der Verglasung beeinflussen kann. Der Schichtaufbau umfasst dabei folgende Schichten:
   - eine Zinnoxidschicht (1),
   - eine mit Aluminium dotierte Zinkoxidschicht (2),
   - eine Silberschicht (3),
   - eine mit Aluminium dotierte Zinkoxidschicht beziehungsweise eine mit Aluminium dotierte Titanoxidschicht (4),
   - eine ZnSn-Schicht beziehungsweise eine mit Aluminium dotierte ZnSn-Schicht, insbesondere eine ZnSnAlOₓ-Schicht (5).

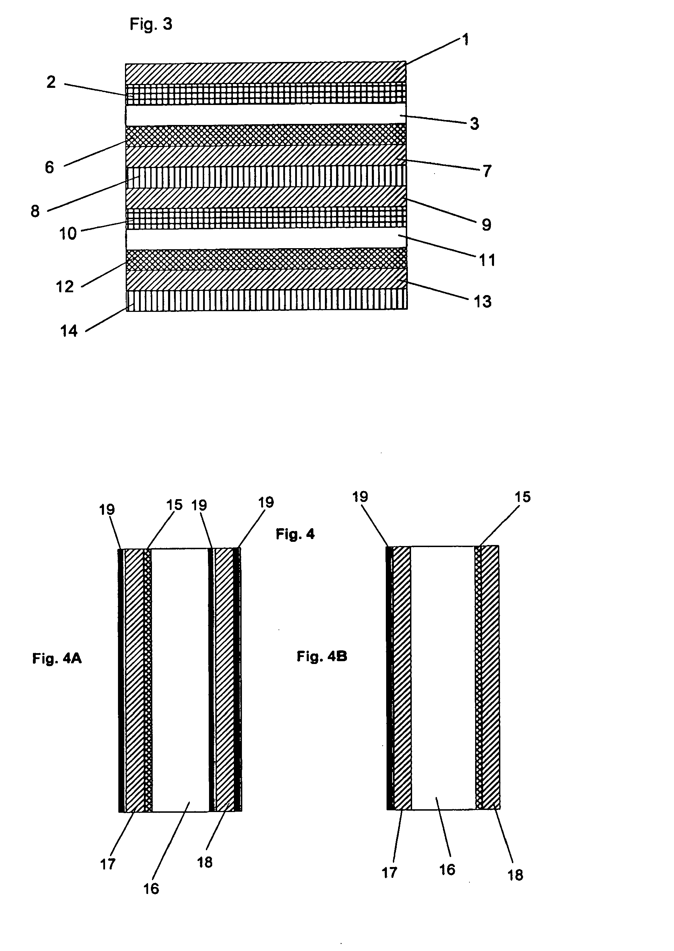

Fig. 3 zeigt einen weiteren beispielhaften Schichtaufbau für eine Funktionsschicht, welche die Transmission der Verglasung beeinflussen kann. Der Schichtaufbau umfasst dabei folgende Schichten:
   - eine Zinnoxidschicht (1),
   - eine mit Aluminium dotierte Zinkoxidschicht (2),
   - eine Silberschicht (3),
   - eine NrCrOx-Schicht (6),
   - eine Zinnoxidschicht (7),
   - eine ZnSnAlOx-Schicht (8),
   - eine Zinnoxidschicht (9),
   - eine mit Aluminium dotierte Zinkoxidschicht (10),
   - eine Silberschicht (11),
   - eine NrCrOx-Schicht (12),
   - eine Zinnoxidschicht (13),
   - eine ZnSnAlOx-Schicht (14).
Fig. 4 zeigt zwei beispielhafte Aufbauten, welche für mindestens einen Teil der Verglasung eines erfindungsgemäßen Gewächshaussystems verwendet werden können.
Fig. 4A zeigt dabei eine besondere Ausführungsform des erfindungsgemäßen Gewächshaussystems, bei dem mindestens eine Funktionsschicht (15) auf der Innenseite einer der Außenseite des Gewächshaussystems nahen Glasscheibe (17) der Verglasung des Gewächshaussystems angebracht ist. Zudem sind auch an der Außenseite der Glasscheibe (17) sowie beidseitig an der dem Innenraum des Gewächshaussystems nahen Glasscheibe (18) Maßnahmen zur Reduzierung der Reflexion (19) vorgesehen.
Fig. 4B zeigt dabei eine weitere besondere Ausführungsform des erfindungsgemäßen Gewächshaussystems, bei dem mindestens eine Funktionsschicht (15) auf der Innenseite einer dem Innenraum des Gewächshaussystems nahen Glasscheibe (18) der Verglasung des Gewächshaussystems angebracht ist. Zudem ist auch an der Außenseite der Glasscheibe (17) eine Maßnahme zur Reduzierung der Reflexion (19) vorgesehen.

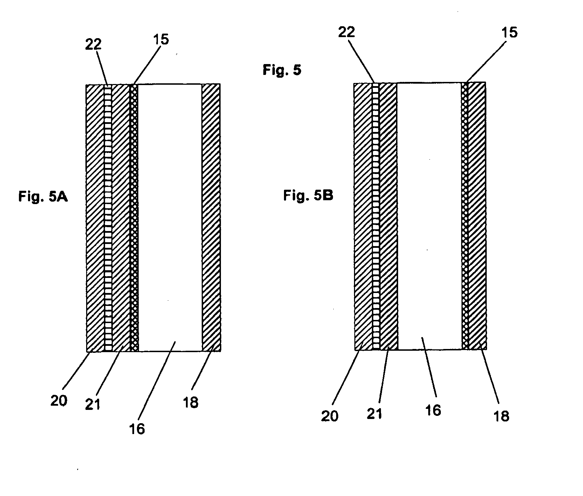

Fig. 5 zeigt zwei weitere beispielhafte Aufbauten, welche für mindestens einen Teil der Verglasung eines erfindungsgemäßen Gewächshaussystems verwendet werden können und eine VSG-Glasscheibenanordnung (20, 21 und 22) umfassen.
Fig. 5A zeigt dabei eine besondere Ausführungsform des erfindungsgemäßen Gewächshaussystems, bei dem mindestens eine Funktionsschicht (15) auf der Innenseite einer der Außenseite des Gewächshaussystems nahen VSG-Glasscheibenanordnung (21) der Verglasung des Gewächshaussystems angebracht ist.
Fig. 5B zeigt dabei eine weitere besondere Ausführungsform des erfindungsgemäßen Gewächshaussystems, bei dem mindestens eine Funktionsschicht (15) auf der Innenseite einer dem Innenraum des Gewächshaussystems nahen Glasscheibe (18) der Verglasung des Gewächshaussystems angebracht ist.

### Bezugszeichenliste:

- 16: Innerhalb der Isolierverglasung gebildeter abgeschlossener Zwischenraum
- 17 und 18: Glasscheiben
- 19: Maßnahme zur Reduzierung der Reflexion
- 20 und 21: Glasscheiben einer VSG-Glasscheibenanordnung
- 22: PVB-Folie

### Ausführungsbeilspiele:

1) Gewächshaussystem, welches eine Orchideenkultur umfasst, wobei die Dachverglasung des Gewächshaussystems mindestens eine an diese Orchideenkultur angepasste Funktionsschicht umfasst. Ein entsprechendes erfindungsgemäßes Gewächshaussystem umfasst dabei als Funktionsschicht, welche den Anteil an diffusem Durchlicht beeinflusst, eine beidseitig durch ein Ätzverfahren relativ stark aufgeraute Glasscheibe, welche den Anteil an diffusem Durchlicht beziehungsweise an diffusem transmittiertem Licht auf ungefähr 50% erhöht. Diese Funktionsschicht dabei zum Beispiel an einer dem Innenraum des Gewächshaussystems nahen Glasscheibe vorgesehen werden. Der dadurch erhaltene hohe Anteil an diffusem Durchlicht beziehungsweise an diffusem transmittiertem Licht ist für Orchideenkulturen besonders wichtig, da diese bei direkter Sonneneinstrahlung schlechter gedeihen.
   Des Weiteren kann ein entsprechendes erfindungsgemäßes Gewächshaussystem als weitere Funktionsschicht, welche die Transmission in mindestens einem bestimmten Wellenlängenbereich beeinflusst, einen Schichtaufbau umfassen, der zum Beispiel wie folgt gestaltet ist:
   - Glas
   - eine 21,3 nm dicke Zinnoxidschicht,
   - eine 6,5 nm dicke mit Aluminium dotierte Zinkoxidschicht,
   - eine 13,8 nm dicke Silberschicht,
   - eine 4 nm dicke mit Aluminium dotierte Zinkoxidschicht,
   - eine 43 nm dicke ZnSnAlOx-Schicht.
   Dieser Schichtaufbau bietet eine hohe Transmission im für Orchideen relevanten PAR-Bereich von 400 nm bis 700 nm bei gleichzeitig geringer Transmission im IR-Bereich. Dies ist für Orchideenkulturen besonders wichtig, da sie bei zu hoher Einstrahlung im IR-Bereich nur schwer gedeihen.
   Dieser Schichtaufbau kann dabei bevorzugt auf der Innenseite einer der Außenseite des Gewächshaussystems nahen Glasscheibe der Verglasung des Gewächshaussystems vorgesehen werden. Dadurch kann ein Aufheizen des Gewächshaussystems zum Beispiel bei starker Lichteinstrahlung, welches für Orchideen nicht erwünscht ist, reduziert werden.
   Dadurch kann eine optimale Kultivierung der Orchideen gewährleistet werden.
   Die Verglasung des Dachs des Gewächshaussystems umfasst dabei zwei parallel auf Distanz angeordnete und miteinander verbundene Glasscheiben, welche einen abgeschlossenen Zwischenraum beziehungsweise eine Isolierverglasung bilden.
   Zudem ist auf der der Außenseite zugewandte Seite der der Außenseite des Gewächshaussystems nahen Glasscheibe eine durch Plasmapolymerisation aufgebrachte SiO₂-Schicht als Maßnahme zur Reduzierung der Reflexion vorgesehen. Dadurch können die Transmission und somit auch der Ertrag gesteigert werden.
   Jede der zwei parallel auf Distanz angeordneten und miteinander verbundenen Glasscheiben der Verglasung, welche einen abgeschlossenen Zwischenraum bilden, ist dabei 3 mm dick. Der Abstand zwischen beiden Scheiben der Isolierverglasung beträgt 14 mm. Der dadurch gebildete Zwischenraum ist mit einem Ar/Luft Gemisch gefüllt, welches 90% Ar umfasst.
   Insbesondere im PAR-Bereich ist die Transmission dabei besonders hoch. Der Anteil an diffusem Durchlicht beziehungsweise an diffusem transmittiertem Licht beträgt 50 %.
2) Gewächshaussystem, welches eine Tomatenkultur umfasst, wobei die Dachverglasung des Gewächshaussystems mindestens eine an diese Tomatenkultur angepasste Funktionsschicht umfasst.
   Ein entsprechendes erfindungsgemäßes Gewächshaussystem kann als Funktionsschicht, welche die Transmission in mindestens einem bestimmten Wellenlängenbereich beeinflusst, einen Schichtaufbau umfassen, der zum Beispiel wie folgt gestaltet ist:
   - Glas
   - eine 23.9 nm dicke Zinnoxidschicht,
   - eine 6 nm dicke mit Aluminium dotierte Zinkoxidschicht,
   - eine 12 nm dicke Silberschicht,
   - eine 4,5 nm dicke mit Aluminium dotierte Zinkoxidschicht,
   - eine 36,7 nm dicke ZnSnAlOx-Schicht.
   Dieser Schichtaufbau bietet eine sehr hohe Transmission im für Tomaten relevanten PAR-Bereich von 400 nm bis 700 nm bei gleichzeitig hoher Transmission im IR-Bereich (zum Beispiel im Wellenlängenbereich von 700nm bis 800 nm). Dies ist für Tomatenkulturen besonders wichtig, da sie bei zu geringer Einstrahlung im IR-Bereich und/oder zu geringer Wärme nur schwer gedeihen.
   Dadurch kann eine optimale Kultivierung der Tomaten gewährleistet werden.
   Die Verglasung des Dachs des Gewächshaussystems umfasst dabei zwei parallel auf Distanz angeordnete und miteinander verbundene Glasscheiben, welche einen abgeschlossenen Zwischenraum beziehungsweise eine Isolierverglasung bilden.
   Der soeben beschriebene Schichtaufbau kann dabei bevorzugt auf der Innenseite einer der Außenseite des Gewächshaussystems nahen Glasscheibe der Verglasung des Gewächshaussystems vorgesehen werden. Dadurch können an der dem Innenraum des Gewächshaussystems nahen Glasscheibe auf beiden Seiten Maßnahmen zur Reduzierung der Reflexion vorgesehen sein. Diese Glasscheibe kann daher auf beiden Seiten durch ein Ätzverfahren leicht aufgeraut werden.
   Zudem ist auf der der Außenseite zugewandte Seite der der Außenseite des Gewächshaussystems nahen Glasscheibe eine durch Plasmapolymerisation aufgebrachte SiO₂-Schicht als Maßnahme zur Reduzierung der Reflexion vorgesehen.
   Durch die verschiedenen Maßnahmen zur Reduzierung der Reflexion kann dabei sowohl die Transmission im PAR-Bereich als auch im IR-Bereich erhöht werden. Dadurch kann der Ertrag gesteigert werden und eine Abkühlung des Gewächshaussystems bei geringer Lichteinstrahlung, welche für die Tomatenkultur nicht erwünscht ist, reduziert werden.
   Die der Außenseite des Gewächshaussystems nahe Glasscheibe ist 4 mm Dick. Die dem Innenraum des Gewächshaussystems nahe Glasscheibe ist dabei 2 mm Dick. Der Abstand zwischen beiden Scheiben der Isolierverglasung beträgt 16 mm. Der dadurch gebildete Zwischenraum ist mit einem Ar/Luft Gemisch gefüllt, welches 90% Ar umfasst.
   Zudem ist ein geringer Anteil an diffusem Durchlicht beziehungsweise an diffusem transmittiertem Licht für Tomaten wünschenswert, da diese bei direkter Sonneneinstrahlung besser gedeihen.
   Insbesondere im PAR-Bereich ist die Transmission dabei besonders hoch. Der Anteil an diffusem Durchlicht beziehungsweise an diffusem transmittiertem Licht beträgt nahezu 0 %.

## Patentansprüche

1. Gewächshaussystem, welches mindestens eine Pflanzenkultur umfasst, wobei mindestens ein Teil der Verglasung des Gewächshaussystems mindestens eine an diese Pflanzenkultur angepasste Funktionsschicht umfasst, wobei ferner die Funktionsschicht den Anteil an diffusem Durchlicht beziehungsweise an diffusem transmittiertem Licht beeinflusst, sodass der Anteil an diffusem Durchlicht zwischen 10 % und 100 % liegt, wobei ferner mindestens ein Teil der Verglasung des Gewächshaussystems mindestens zwei parallel angeordnete und miteinander verbundene Glasscheiben, welche mindestens einen abgeschlossenen Zwischenraum bilden, umfasst, wobei ferner mindestens eine Glasscheibe arm an Stoffen, die Strahlung mit einer Wellenlänge von 10 nm bis 1,1 mm absorbieren, ist, wobei der Gehalt an solchen Stoffen weniger als 0,1 % beträgt, wobei ferner mindestens eine Maßnahme zur Reduzierung der Reflexion an mindestens einer Glasscheibe vorgesehen ist.

2. Gewächshaussystem nach Anspruch 1,
**dadurch gekennzeichnet,**
**dass** mindestens ein Teil der Verglasung des Gewächshaussystems mindestens eine Metall- und/oder Metalloxidschicht umfasst.

3. Gewächshaussystem nach einem oder beiden der Ansprüche 1 oder 2,
**dadurch gekennzeichnet,**
**dass** mindestens ein Teil der Verglasung des Gewächshaussystems mindestens eine Silberschicht und/oder mindestens eine aluminiumdotierte Zinkoxidschicht und/oder mindestens eine Titanoxidschicht umfasst.

4. Gewächshaussystem nach einem oder mehreren der Ansprüche 1 bis 3,
**dadurch gekennzeichnet,**
**dass** mindestens ein Teil der Verglasung des Gewächshaussystems mindestens zwei Metall- und/oder Metalloxidschichten mit unterschiedlichen Dicken umfassen.

5. Gewächshaussystem nach einem oder mehreren der Ansprüche 1 bis 4,
**dadurch gekennzeichnet,**
**dass** mindestens eine Funktionsschicht, welche die Transmission in mindestens einem bestimmten Wellenlängenbereich beeinflusst, auf einer der Außenseite des Gewächshaussystems nahen Glasscheibe der Verglasung des Gewächshaussystems aufgebracht ist.

6. Gewächshaussystem nach Anspruch 5,
**dadurch gekennzeichnet,**
**dass** mindestens eine Funktionsschicht, welche die Transmission in mindestens einem bestimmten Wellenlängenbereich beeinflusst, auf der dem Innenraum des Gewächshaussystems zugewandten Seite einer der Außenseite des Gewächshaussystems nahen Glasscheibe der Verglasung des Gewächshaussystems aufgebracht ist.

7. Gewächshaussystem nach Anspruch 1,
**dadurch gekennzeichnet,**
**dass** mindestens eine Maßnahme zur Reduzierung der Reflexion an einer der Außenseite des Gewächshaussystems nahen Glasscheibe der Verglasung des Gewächshaussystems oder an der nach Außen gerichteten Seite einer der Außenseite des Gewächshaussystems nahen Glasscheibe der Verglasung des Gewächshaussystems vorgesehen ist.

8. Gewächshaussystem nach Anspruch 1,
**dadurch gekennzeichnet,**
**dass** mindestens eine Maßnahme zur Reduzierung der Reflexion an einer dem Innenraum des Gewächshaussystems nahen Glasscheibe der Verglasung des Gewächshaussystems vorgesehen ist.

9. Gewächshaussystem nach Anspruch 8,
**dadurch gekennzeichnet,**
**dass** mindestens eine Maßnahme zur Reduzierung der Reflexion an beiden Seiten einer dem Innenraum des Gewächshaussystems nahen Glasscheibe der Verglasung des Gewächshaussystems vorgesehen ist.

10. Gewächshaussystem nach einem oder mehreren der Ansprüche 1 bis 9,
**dadurch gekennzeichnet,**
**dass** mindestens ein Teil der Verglasung des Gewächshaussystems so ausgestaltet ist, dass mindestens eine Lichtquelle entweder in der Verglasung selbst integriert oder am Rande der Verglasung angebracht ist, sodass sie die darunter liegende(n) Pflanzenkultur(en) bestrahlen kann.

11. Gewächshaussystem nach einem oder mehreren der Ansprüche 1 bis 10,
**dadurch gekennzeichnet,**
**dass** das Gewächshaussystem mindestens zwei verschiedene Zonen umfasst.

12. Gewächshaussystem nach Anspruch 11,
**dadurch gekennzeichnet,**
**dass** das Gewächshaussystem mindestens zwei verschiedene Zonen mit unterschiedlichen Verglasungen umfasst, welche dank unterschiedlicher Funktionsschichten an die in der jeweiligen Zone befindlichen Pflanzenkultur angepasst ist.

## Claims

1. A greenhouse system comprising at least one crop, whereby at least part of the glazing of the greenhouse system comprises at least one functional layer that is adapted to this crop, whereby moreover, the functional layer influences the amount of diffuse transmitted light, so that the amount of diffuse transmitted light is between 10% and 100%, whereby moreover, at least part of the glazing of the greenhouse system comprises at least two glass panes that are arranged parallel and joined together, forming at least one closed space in-between, whereby furthermore, at least one glass pane is low in substances that absorb radiation having a wavelength ranging from 10 nm to 1.1 mm, whereby the content of such substances is less than 0.1%, whereby furthermore, at least one measure is provided in order to reduce reflection on at least one glass pane.

2. The greenhouse system according to claim 1,
**characterized in that**
at least part of the glazing of the greenhouse system comprises at least one metal layer and/or metal oxide layer.

3. The greenhouse system according to one or both of claims 1 or 2,
**characterized in that**
at least part of the glazing of the greenhouse system comprises at least one silver layer and/or at least one aluminum-doped zinc oxide layer and/or at least one titanium oxide layer.

4. The greenhouse system according to one or more of claims 1 to 3,
**characterized in that**
at least part of the glazing of the greenhouse system comprises at least two metal layers and/or metal oxide layers of different thicknesses.

5. The greenhouse system according to one or more of claims 1 to 4,
**characterized in that**
at least one functional layer that influences the transmission in at least one specific wavelength spectrum is applied onto a glass pane of the glazing of the greenhouse system, said glass pane being near the outside of the greenhouse system.

6. The greenhouse system according to claim 5,
**characterized in that**
at least one functional layer that influences the transmission in at least one specific wavelength spectrum is applied onto the side of a glass pane of the glazing of the greenhouse system facing the inside of the greenhouse system, said glass pane being near the outside of the greenhouse system.

7. The greenhouse system according to claim 1,
**characterized in that**
at least one measure is provided to reduce the reflection on a glass pane of the glazing of the greenhouse system, said glass pane being near the outside of the greenhouse system or on the side of a glass pane of the glazing of the greenhouse system facing the outside of the greenhouse system, said glass pane being near the outside of the greenhouse system.

8. The greenhouse system according to claim 1,
**characterized in that**
at least one measure is provided to reduce the reflection on a glass pane of the glazing of the greenhouse system, said glass pane being near the inside of the greenhouse system.

9. The greenhouse system according to claim 8,
**characterized in that**
at least one measure is provided to reduce the reflection on both sides of a glass pane of the glazing of the greenhouse system, said glass pane being near the inside of the greenhouse system.

10. The greenhouse system according to one of more of claims 1 to 9,
**characterized in that**
at least part of the glazing of the greenhouse system is configured in such a way that at least one source of light is either integrated into the glazing itself or else installed on the edge of the glazing, so that it can illuminate the crop(s) beneath it.

11. The greenhouse system according to one or more of claims 1 to 10,
**characterized in that**
the greenhouse system has at least two different zones.

12. The greenhouse system according to claim 11,
**characterized in that**
the greenhouse system comprises at least two different zones with different glazing which, owing to different functional layers, is adapted to the crop located in each individual zone.

## Revendications

1. Système de serre comprenant au moins une culture de plante, au moins une partie du vitrage du système de serre comprenant au moins une couche fonctionnelle adaptée à cette culture de plante, la couche fonctionnelle influençant en outre la fraction de lumière diffuse ou lumière transmise diffuse, de sorte que la fraction de lumière traversante diffuse est comprise entre 10 % et 100 %, au moins une partie du vitrage du système de serre comprenant par ailleurs au moins deux vitres de verre disposées parallèlement et reliées entre elles qui forment au moins un espace intermédiaire fermé, au moins une vitre de verre étant en outre pauvre en substances qui absorbent un rayonnement présentant une longueur d'onde de 10 nm à 1,1 mm, la teneur en telles substances étant inférieure à 0,1 %, au moins une mesure de réduction de la réflexion étant en outre prévue sur au moins une vitre de verre.

2. Système de serre selon la revendication 1, **caractérisé en ce qu'**au moins une partie du vitrage du système de serre comprend au moins une couche de métal et/ou d'oxyde de métal.

3. Système selon l'une ou les deux revendications 1 ou 2, **caractérisé en ce qu'**au moins une partie du vitrage du système de serre comprend au moins une couche d'argent et/ou au moins une couche d'oxyde de zinc dopée à l'aluminium et/ou au moins une couche d'oxyde de titane.

4. Système de serre selon l'une ou plusieurs des revendications 1 à 3, **caractérisé en ce qu'**au moins une partie du vitrage du système de serre comprend au moins deux couches de métal et/ou d'oxyde de métal présentant différentes épaisseurs.

5. Système de serre selon l'une ou plusieurs des revendications 1 à 4, **caractérisé en ce qu'**au moins une couche fonctionnelle influençant la transmission dans au moins une plage de longueurs d'ondes déterminée est appliquée sur une vitre de verre du vitrage du système de serre proche de l'extérieur du système de serre.

6. Système de serre selon la revendication 5, **caractérisé en ce qu'**au moins une couche fonctionnelle influençant la transmission dans au moins une plage de longueurs d'ondes déterminée est appliquée sur le côté, tourné vers l'espace intérieur du système de serre, d'une vitre de verre du vitrage du système de serre proche de l'extérieur du système de serre.

7. Système de serre selon la revendication 1, **caractérisé en ce qu'**est prévue au moins une mesure de réduction de la réflexion sur une vitre de verre du vitrage du système de serre proche de l'extérieur du système de serre ou sur le côté, tourné vers l'extérieur, d'une vitre de verre du vitrage du système de serre proche de l'extérieur du système de serre.

8. Système de serre selon la revendication 1, **caractérisé en ce qu'**est prévue au moins une mesure de réduction de la réflexion sur une vitre de verre du vitrage du système de serre proche de l'espace intérieur du système de serre.

9. Système de serre selon la revendication 8, **caractérisé en ce qu'**est prévue au moins une mesure de réduction de la réflexion sur les deux côtés d'une vitre de verre du vitrage du système de serre proche de l'espace intérieur du système de serre.

10. Système de serre selon l'une ou plusieurs des revendications 1 à 9, **caractérisé en ce qu'**au moins une partie du vitrage du système de serre est réalisée de manière telle qu'au moins une source de lumière est intégrée dans le vitrage lui-même ou est montée sur le bord du vitrage de sorte qu'elle peut irradier la ou les culture(s) de plante(s) située en dessous.

11. Système de serre selon l'une ou plusieurs des revendications 1 à 10, **caractérisé en ce que** le système de serre comprend au moins deux zones différentes.

12. Système de serre selon la revendication 11, **caractérisé en ce que** le système de serre comprend au moins deux zones différentes avec des vitrages différents qui, grâce à différentes couches fonctionnelles, sont adaptés à la culture de plante qui se trouve dans la zone respective.
